# EUROPÄISCHE PATENTSCHRIFT

(11) **EP 2 591 312 B1**
(45) Veröffentlichungstag und Bekanntmachung des Hinweises auf die Patenterteilung: **13.07.2016**
(21) Anmeldenummer: 11720077.4
(22) Anmeldetag: 09.05.2011
(51) Int. Cl.: G01C 15/00, G01C 3/08, G01S 17/02, G01S 17/08, G01S 15/08, G01S 7/497

(54) **DISTANZMESSGERÄT ZUR WINKELABHÄNGIGEN, BERÜHRUNGSLOSEN DISTANZMESSUNG**
TELEMETER FOR ANGLE-DEPENDENT, CONTACTLESS DISTANCE MEASUREMENT
TÉLÉMÈTRE POUR MESURAGE DE DISTANCE DÉPENDANT DE L'ANGLE ET SANS CONTACT

(30) Priorität: 05.07.2010 DE 102010030916
(43) Veröffentlichungstag der Anmeldung: 15.05.2013
(73) Patentinhaber: Robert Bosch GmbH, 70442 Stuttgart (DE)
(72) Erfinder: SCHNEIDER, Bettina, 71642 Ludwigsburg (DE); SCHNEIDER, Marcus, 71642 Ludwigsburg (DE)
(86) Internationale Anmeldenummer: PCT/EP2011/057373
(87) Internationale Veröffentlichungsnummer: WO 2012/004022

(56) Entgegenhaltungen:
- WO-A1-03/087718
- WO-A2-2007/067771
- DE-A1- 4 316 348
- DE-A1-102009 005 428
- DE-U1-202006 012 703
- US-A1- 2008 290 164

## Beschreibung

### GEBIET DER ERFINDUNG

Die vorliegende Erfindung betrifft ein Distanzmessgerät zum berührungslosen Messen einer Distanz zwischen dem Messgerät und einem Zielgegenstand.

### HINTERGRUND DER ERFINDUNG

Es sind Distanzmessgeräte bekannt, die in der Lage sind, eine Distanz zwischen dem Messgerät und einem Zielgegenstand berührungslos zu messen. Beispielsweise kann durch Aussenden eines Lasersignals, eines Ultraschallsignals oder eines Radarsignals und anschließendes Detektieren eines entsprechend von dem Zielgegenstand rückreflektierten Signals aufgrund der Laufzeit zwischen Aussendung und Detektion auf die Distanz geschlossen werden.

Berührungslos arbeitende Distanzmessgeräte finden eine wachsende Verbreitung beispielsweise im Hausbau oder bei Renovierungsarbeiten. Beispielsweise lässt sich problemlos die Länge einer Wand zwecks Tapetenaufmaß bestimmen. Auch ein Abstand beispielsweise zwischen zwei starren Pfosten zwecks eines korrekten Ablängens eines verbindenden Holzbalkens kann bestimmt werden.

Allerdings wurde beobachtet, dass bei bestimmten Messsituationen zuverlässige Messgenauigkeit schwierig zu erreichen sein kann.

WO 03/087718 A1 offenbart ein Laser-Entfernungsmeßgerät, das bei Annäherung an einen Sollwinkel eine optische oder taktile Rückmeldung an den Nutzer liefert.

### ZUSAMMENFASSUNG DER ERFINDUNG

Der Erfindung liegt die folgende Erkenntnis zugrunde:
Gerade beispielsweise im Heimwerkerbereich, wo häufig eine einzelne Person Tätigkeiten durchführt, kann es immer dann zu Problemen kommen, wenn ein Abstand zwischen zwei Gegenständen, wie zum Beispiel zwischen zwei Pfosten, exakt gemessen werden soll, obwohl zumindest einer der Pfosten noch nicht in seiner endgültigen Position fixiert ist. Eine solche Situation kann beispielsweise beim Stellen von Leichtbauwänden oder Holzkonstruktionen vorliegen. Herkömmlicherweise wird dann meist mit einer Hand versucht, den Pfosten oder die Wand möglichst senkrecht zu halten, während mit der anderen Hand das zum Beispiel Laser-basierte Distanzmessgerät so lange hin- und herbewegt wird, bis der Lasermesspunkt irgendwann den anderen Pfosten trifft. Allerdings können sich hierbei erhebliche Ungenauigkeiten hinsichtlich der Ausrichtung und Orientierung des Pfostens bzw. des daran angelegten Distanzmessgerätes einstellen, so dass es entsprechend auch zu Ungenauigkeiten hinsichtlich der angestrebten Distanzmessung kommen kann. Außerdem ist es in der Regel notwendig, zur Auslösung der Distanzmessung an dem Distanzmessgerät einen Knopf zu betätigen, was zu einem weiteren Verwackeln des Distanzmessgerätes und damit zu einer weiteren Abnahme der Messgenauigkeit der Distanzmessung führen kann. Eine weitere Steigerung des Schwierigkeitsgrades kann sich durch den zusätzlichen Einsatz einer Wasserwaage ergeben, welche in Ermangelung einer dritten Hand zum Verkippen oder Abrutschen neigen kann.

Es kann daher als eine Aufgabe der vorliegenden Erfindung angesehen werden, eine Möglichkeit zu schaffen, eine korrekte Distanzmessung auch in dem Fall durchzuführen, dass ein Gegenstand, in Bezug auf den die Distanz gemessen werden soll, in seiner Orientierung noch nicht fixiert ist.

Eine solche Aufgabe kann mit einem Distanzmessgerät gemäß Anspruch 1 gelöst werden. Weitere Ausgestaltungen des Distanzmessgeräts sind in den abhängigen Ansprüchen angegeben.

Gemäß einem Aspekt der vorliegenden Erfindung weist ein Distanzmessgerät hierzu (i.) eine Distanzmessvorrichtung zum berührungslosen Messen einer Distanz zwischen dem Distanzmessgerät und einem Zielgegenstand, (ii.) eine Winkelmessvorrichtung zum Messen eines aktuellen Orientierungswinkels zwischen einer aktuellen Orientierung des Distanzmessgerätes und einer Referenzorientierung und (iii.) eine Steuerung auf. Die Steuerung ist dabei dazu ausgelegt, den aktuellen Orientierungswinkel aus der Winkelmessvorrichtung auszulesen und in Abhängigkeit des ausgelesenen aktuellen Orientierungswinkels und eines vorgegebenen Zielwinkels die Distanzmessvorrichtung zum Messen einer Zieldistanz anzusteuern.

Die Distanzmessvorrichtung kann eine Distanz zwischen dem Distanzmessgerät und dem Zielgegenstand beispielsweise optisch messen. Dazu kann ein modulierter Laserstrahl hin zu dem Zielgegenstand ausgesendet werden und das von dem Zielgegenstand rückreflektierte Lichtsignal kann detektiert werden, so dass aus einem Phasenunterschied zwischen dem ausgesendeten und dem detektierten modulierten Lasersignal auf eine Laufzeit und somit auf die zu messende Distanz geschlossen werden kann. Alternativ kann die Distanzmessvorrichtung auch andere berührungslose Messverfahren beispielsweise basierend auf der Aussendung und Detektion eines Ultraschallsignals oder eines Radarsignals verwenden.

Die Winkelmessvorrichtung kann in das Distanzmessgerät integriert sein und mit diesem fest verbunden sein, so dass die Orientierung des Distanzmessgerätes im Raum, das heißt, bezogen auf eine Referenzorientierung, gemessen werden kann. Zur Winkelmessung können hierbei verschiedene physikalische Effekte genutzt werden.

Beispielsweise kann die Winkelmessvorrichtung mit einer Wasserwaage ausgeführt sein. In diesem Fall kann mit Hilfe der Wasserwaage die Orientierung des Distanzmessgerätes bezogen auf die Richtung des Gravitationsfeldes, das heißt, bezogen auf die Horizontale, bestimmt werden. Die Anzeige der Wasserwaage kann ausgelesen werden, beispielsweise optisch, und so ein den Orientierungswinkel wiedergebendes elektrisches Messsignal zur Verfügung gestellt werden. Mit anderen Worten kann eine elektronisch auswertbare Wasserwaage als Winkelmessvorrichtung vorgesehen sein. Die Wasserwaage kann hierbei in Relation zu der Distanzmessvorrichtung verkippbar ausgelegt sein. In der Regel kann eine Wasserwaage nur eine Information darüber liefern, dass ein bestimmter Winkel eingehalten wird oder nicht; beispielsweise gibt die Wasserwaage an, ob sie exakt parallel zum Boden angeordnet ist oder nicht. Eine Referenzorientierung bzw. ein Zielwinkel kann dadurch eingestellt werden, dass die Anordnung der Wasserwaage bzw. insbesondere die Orientierung der Wasserwaage in Bezug auf das Distanzmessgerät verkippt werden kann.

Alternativ kann das Distanzmessgerät mit einem Beschleunigungssensor ausgeführt sein. Beschleunigungssensoren sind beispielsweise aus der Fahrzeugtechnik bekannt. Sie können dazu ausgelegt sein, eine Orientierung beispielsweise in Relation zu einem äußeren Kraftfeld absolut zu messen. Alternativ können sie dazu ausgelegt sein, eine Änderung einer Orientierung aufgrund der dabei auftretenden Beschleunigungen relativ zu messen.

Die in dem Distanzmessgerät vorgesehene Steuerung kann dazu ausgelegt sein, die Distanzmessvorrichtung derart anzusteuern, dass eine Zieldistanz gemessen wird, sobald eine Differenz zwischen dem gemessenen aktuellen Orientierungswinkel des Distanzmessgerätes und dem vorgegebenen Zielwinkel einen Toleranzwert unterschreitet.

Unter dem "Zielwinkel" kann hierbei derjenige Orientierungswinkel zwischen der Orientierung des Distanzmessgerätes und der Referenzorientierung verstanden werden, bei dem eine Distanzmessung vom Anwender gewünscht durchgeführt werden soll. Soll beispielsweise eine Distanzmessung dann durchgeführt werden, wenn das Distanzmessgerät unter einem Orientierungswinkel von 90° zur als Referenzorientierung dienenden Horizontalen angeordnet ist, wird der Zielwinkel als 90° definiert. Der "Toleranzwert" kann einen Toleranzwinkelbereich um den Zielwinkel herum angeben, innerhalb dessen auch eine Distanzmessung ausgelöst werden soll. Beispielsweise kann der Toleranzwert auf +/- 1° eingestellt werden, so dass bei gegebenem Zielwinkel von 90° eine Distanzmessung bei Erreichen eines Orientierungswinkels zwischen 89° und 91° vorgenommen wird.

Der Zielwinkel kann vorteilhafterweise mit Hilfe einer Eingabevorrichtung vorgegeben werden. Er kann beispielsweise mittels einer Tastatur, eines Touchscreens oder eines bezüglich seiner Winkelanordnung auslesbaren Drehhebels eingegeben werden. Es kann weiterhin vorteilhaft sein, auch den Toleranzwert von einem Anwender vorgeben zu lassen.

Die Steuerung des Distanzmessgerätes kann dazu ausgelegt sein, eine Distanz zwischen dem Distanzmessgerät und dem Zielgegenstand kontinuierlich zu messen, sobald ein Messvorgang beispielsweise durch Drücken eines Messstartknopfes an dem Distanzmessgerät ausgelöst wurde. "Kontinuierlich" kann hierbei bedeuten, dass die Distanz in kurzen Zeitabständen, beispielsweise mehrmals in der Sekunde, beispielsweise mit einer Frequenz von 1-50 Hz, ermittelt wird. Die Steuerung kann dann ferner dazu ausgelegt sein, die gewünschte Zieldistanz erst dann zu ermitteln, wenn eine Differenz zwischen dem aktuellen Orientierungswinkel und dem vorgegebenen Zielwinkel einen Toleranzwert unterschreitet. Mit anderen Worten soll die Distanzvorrichtung nach Auslösen eines Messvorganges ständig die Distanz zu dem Zielgegenstand, auf den sie ausgerichtet ist, messen, die gemessene Distanz jedoch erst dann als "Zieldistanz" anerkennen, wenn die Orientierung des Distanzmessgeräts den Zielwinkel erreicht hat.

Das Distanzmessgerät weist ferner eine Ausgabevorrichtung zum Ausgeben von Information an einen Anwender auf. Dabei kann die Steuerung beispielsweise dazu ausgelegt sein, mit Hilfe der Ausgabevorrichtung ein Signal auszugeben, sobald eine Zieldistanz gültig gemessen wurde. Mit anderen Worten kann dem Anwender ein Signal übermittelt werden, sobald das Distanzmessgerät die gewünschte Orientierung erreicht hat und eine Messung der Zieldistanz durchgeführt werden konnte.

Die Steuerung ist ferner dazu ausgelegt, mittels der Ausgabevorrichtung eine Information darüber auszugeben, in welcher Richtung das Distanzmessgerät verkippt werden muss, um es der für die Messung gewünschten Orientierung, das heißt dem Zielwinkel, anzunähern. Mit anderen Worten dient die Ausgabevorrichtung dazu, dem Anwender einen Hinweis zu geben, in welche Richtung das Messgerät verkippt ist bzw. in welche Richtung das Messgerät zu verkippen ist, um eine gültige Zieldistanzmessung durchführen zu können.

Die Ausgabevorrichtung kann dazu ausgelegt sein, die Information optisch und/oder akustisch auszugeben. Beispielsweise kann dem Anwender mit Hilfe eines Signaltons oder einer optischen Anzeige wie zum Beispiel einem Blinklicht oder einem Farbenwechsel einer LED angezeigt werden, dass eine Zieldistanz gültig gemessen wurde. Ferner kann zum Beispiel mit einer optischen Anzeige wie zum Beispiel einem (LCD) angezeigt werden, in welche Richtung das Distanzmessgerät verkippt werden sollte, um sich dem Zielwinkel anzunähern. Eine solche Information kann auch akustisch, beispielsweise durch Sprachausgabe, bereitgestellt werden. Die Ausgabevorrichtung kann dabei auch dazu dienen, die gemessene Zieldistanz optisch bzw. akustisch auszugeben.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

### KURZE BESCHREIBUNG DER ZEICHNUNG

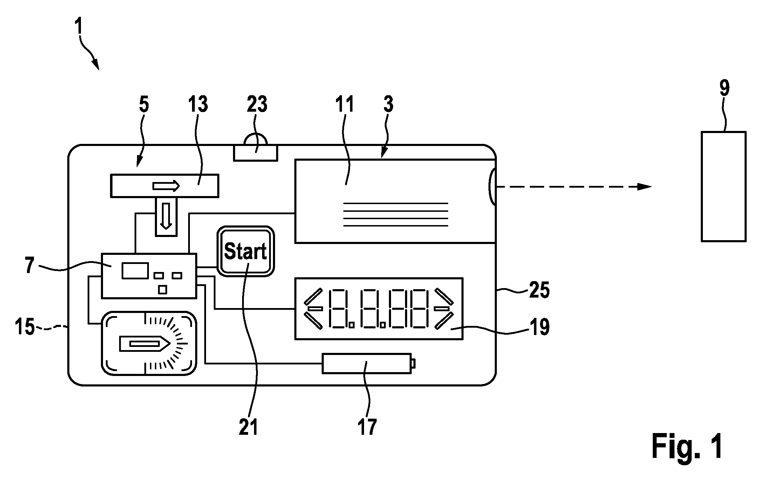

Fig. 1 zeigt eine erfindungsgemäße Ausgestaltung eines Distanzmessgerätes.

Die Figur ist lediglich schematisch und nicht maßstabsgetreu. Die in der Figur dargestellte und im Nachfolgenden beschriebene Ausführungsform ist lediglich beispielhaft und soll nicht einschränkend ausgelegt werden.

### DETAILIERTE BESCHREIBUNG DER AUSFÜHRUNGSFORM

Das in Fig. 1 dargestellte erfindungsgemäße Distanzmessgerät 1 weist eine Distanzmessvorrichtung 3, eine Winkelmessvorrichtung 5 und eine Steuerung 7 auf.

Die Distanzmessvorrichtung 3 dient zum berührungslosen Messen einer Distanz zwischen dem Messgerät 1 und einem Zielgegenstand 9. Im beschriebenen Ausführungsbeispiel weist die Distanzmessvorrichtung 3 hierzu eine Distanzmesseinheit 11 auf, die sowohl eine Laserquelle zur Aussendung modulierten Laserlichts hin zu dem Zielgegenstand 9 als auch eine Detektoranordnung zur Detektion von Laserlicht, welches von dem Zielgegenstand 9 rückreflektiert wurde, aufweist.

Die Winkelmessvorrichtung 5 weist Beschleunigungssensoren 13 auf, die Beschleunigungen in zueinander orthogonal stehenden Richtungen detektieren können. Die von den Sensoren 13 bereitgestellten elektronischen Signale können Informationen über einen aktuellen Orientierungswinkel des Distanzmessgerätes 1 liefern, welche von der damit verbundenen Steuerung 7 ausgelesen werden können.

Es ist ferner eine ebenfalls mit der Steuerung 7 verbundene Eingabevorrichtung 15 vorgesehen, mit Hilfe derer ein von dem Messgerät zu erreichender Zielwinkel bzw. eingestellt werden kann. Im dargestellten Beispiel weist die Eingabevorrichtung einen Hebel auf, dessen Orientierung ausgelesen und als elektrisches Signal an die Steuerung weitergeleitet werden kann.

In einer alternativen Ausgestaltung (in Fig. 1 nicht dargestellt) kann die Winkelmessvorrichtung auch mit Hilfe einer drehbaren Wasserwaage ausgeführt sein. Die Wasserwaage kann dabei z.B. optisch oder elektrisch ausgelesen werden, so dass letztendlich ein eine Orientierung der Wasserwaage wiedergebendes elektrisches Signal erzeugt und an die Steuerung weitergeleitet werden kann. In diesem Fall kann der Zielwinkel direkt durch eine geeignete Ausrichtung der Orientierung der drehbaren Wasserwaage eingestellt werden.

Mit Hilfe eines Startknopfes 21 kann ein Messvorgang ausgelöst werden. Ferner sind ein Display 19 und eine LED 23 als Ausgabevorrichtungen vorgesehen, um dem Anwender mit Hilfe des Displays 19 anzeigen zu können, in welche Richtung das Distanzmessgerät 1 verkippt werden soll, um sich dem Zielwinkel zu nähern, und um dem Anwender mit Hilfe der LED 23 dann anzuzeigen, dass der Zielwinkel erreicht wurde und eine Distanzmessung vorgenommen wurde, und um dann die gemessene Distanz auf dem Display 19 anzeigen zu können. Die Energieversorgung des Distanzmessgerätes 1 erfolgt über Batterien 17. Alle Komponenten des Messgerätes 1 sind in platzsparender Weise in einem Gehäuse 25 untergebracht. Aufgrund der geringen Größe sowie der autarken Energieversorgung ist das Distanzmessgerät als portables Handgerät verwendbar.

Im Folgenden wird eine mögliche Verwendung und Arbeitsweise des Distanzmessgerätes erklärt.

Das Distanzmessgerät 1 kann an eine Oberfläche eines ersten Gegenstandes angelegt werden. Dabei ist dieser erste Gegenstand eventuell in seiner Position und Orientierung noch nicht festgelegt. Es ist aber bekannt, welche Orientierung er haben soll. Wenn es sich beispielsweise um einen Pfosten handelt, der möglichst senkrecht auf dem Boden stehen soll, kann als Referenzorientierung der horizontale Boden angenommen werden und als Zielwinkel ein 90°-Winkel angenommen werden. Dieser Zielwinkel kann vorab von dem Anwender mit Hilfe der Eingabevorrichtung 15 eingestellt werden.

Betätigt der Anwender dann den Startknopf 21, so werden mittels der Laser-Distanzmessvorrichtung 3 kontinuierlich Distanzmessungen durchgeführt, beispielsweise mit einer Messfrequenz von 2 Hz. Nähert sich das Distanzmessgerät 1 nicht dem angestrebten Zielwinkel, kann die Steuerung 7 dies aufgrund der von der Winkelmessvorrichtung 5 gelieferten Daten erkennen und über die angeschlossene Anzeige 19 dem Anwender eine Richtung signalisieren, in die das Distanzmessgerät 1 verkippt werden sollte, um sich dem Zielwinkel zu nähern. Stimmt der mittels der Winkelmessvorrichtung 5 gemessene Ist-Winkel, das heißt die aktuelle Orientierung des Distanzmessgerätes 1 in Bezug auf die Referenzorientierung, mit dem zuvor eingestellten Zielwinkel überein, so wird der aktuell vorliegende Distanzmesswert auf dem Display 19 ausgegeben. Durch die LED 23 wird dem Anwender die Gültigkeit der Messung beispielsweise durch Blinken mitgeteilt.

Betätigt der Anwender den Startknopf 21 erneut, so wird die Anzeige im Display 19 gelöscht und eine neue Messung wird gestartet.

Es kann somit mit Hilfe des vorgeschlagenen Distanzmessgerätes 1 ermöglicht werden, auch in "wackeligen" Situationen korrekte Distanzmessungen durchzuführen. Das Distanzmessgerät ist dabei einfach zu bedienen. Ferner ist es aufgrund der darin verwendeten kostengünstigen Bauteile und Komponenten einfach und zu geringen Kosten herstellbar.

## Patentansprüche

1. Distanzmessgerät (1) aufweisend:
eine Distanzmessvorrichtung (3) zum berührungslosen Messen einer Distanz zwischen dem Distanzmessgerät (1) und einem Zielgegenstand (9);
eine Winkelmessvorrichtung (5) zum Messen eines aktuellen Orientierungswinkels zwischen einer aktuellen Orientierung des Distanzmessgerätes (1) und einer Referenzorientierung;
eine Steuerung (7);
wobei die Steuerung (7) dazu ausgelegt ist, den aktuellen Orientierungswinkel aus der Winkelmessvorrichtung (5) auszulesen und in Abhängigkeit des ausgelesenen aktuellen Orientierungswinkels und eines vorgegebenen Zielwinkels die Distanzmessvorrichtung (3) zum Messen einer Zieldistanz anzusteuern, sobald eine Differenz zwischen dem aktuellen Orientierungswinkel und dem vorgegebenen Zielwinkel einen Toleranzwert unterschreitet, und mit einer Ausgabevorrichtung (19) zum Ausgeben von Information an einen Anwender;
**dadurch gekennzeichnet, dass** die Steuerung (7) dazu ausgelegt ist, mittels der Ausgabevorrichtung (19) Information darüber auszugeben, in welche Richtung das Distanzmessgerät (1) zur Annäherung an den Zielwinkel verkippt werden muss.

2. Distanzmessgerät nach einem der Ansprüche 1,
wobei die Steuerung (7) dazu ausgelegt ist, nach einem Auslösen eines Meßvorganges die Distanzmessvorrichtung (3) anzusteuern, kontinuierlich eine Distanz zwischen dem Distanzmessgerät (1) und dem Zielgegenstand zu messen und die Zieldistanz zu ermitteln, sobald eine Differenz zwischen dem aktuellen Orientierungswinkel und dem vorgegebenen Zielwinkel einen Toleranzwert unterschreitet.

3. Distanzmessgerät nach einem der Ansprüche 1 oder 2, ferner aufweisend:
eine Ausgabevorrichtung (23) zum Ausgeben von Information an einen Anwender;
wobei die Steuerung (7) dazu ausgelegt ist, mittels der Ausgabevorrichtung (23) ein Signal auszugeben, sobald eine Zieldistanz gemessen wurde.

4. Distanzmessgerät nach einem der Ansprüche 1, 2 oder 3,
wobei die Ausgabevorrichtung (19, 23) zur optischen und/oder akustischen Informationsausgabe ausgelegt ist.

5. Distanzmessgerät nach einem der Ansprüche 1 bis 4, ferner aufweisend:
eine Eingabevorrichtung (15) zum Eingeben des Zielwinkels.

6. Distanzmessgerät nach einem der Ansprüche 1 bis 5,
wobei die Winkelmessvorrichtung (5) mit einer Wasserwaage ausgeführt ist.

7. Distanzmessgerät nach Anspruch 6,
wobei die Wasserwaage in Relation zu der Distanzmessvorrichtung (3) verkippt werden kann.

8. Distanzmessgerät nach einem der Ansprüche 1 bis 5,
wobei die Winkelmessvorrichtung (5) mit einem Beschleunigungssensor (13) ausgeführt ist.

## Claims

1. Rangefinder (1), comprising:
a distance measuring device (3) for the contactless measurement of a distance between the rangefinder (1) and a target object (9);
an angle measuring device (5) for measuring a current orientation angle between a current orientation of the rangefinder (1) and a reference orientation;
a controller (7);
wherein the controller (7) is configured to read the current orientation angle from the angle measuring device (5) and, in a manner dependent on the read current orientation angle and a predetermined target angle, to actuate the distance measuring device (3) for measuring a target distance as soon as a difference between the current orientation angle and the predetermined target angle drops below a tolerance value, and comprising an output device (19) for outputting information to a user;
**characterized in that** the controller (7) is configured to provide information by means of the output device (19) in respect of the direction in which the rangefinder (1) needs to be tilted in order to approach the target angle.

2. Rangefinder according to one of Claims 1,
wherein the controller (7) is configured, after triggering a measurement process, to actuate the distance measuring device (3), continuously measure a distance between the rangefinder (1) and the target object and establish the target distance as soon as a difference between the current orientation angle and the predetermined target angle drops below a tolerance value.

3. Rangefinder according to either of Claims 1 and 2, furthermore comprising:
an output device (23) for outputting information to a user; wherein the controller (7) is configured to output a signal by means of the output device (23) as soon as a target distance was measured.

4. Rangefinder according to one of Claims 1, 2 and 3, wherein the output device (19, 23) is configured to output information optically and/or acoustically.

5. Rangefinder according to one of Claims 1 to 4, furthermore comprising:
an input device (15) for entering the target angle.

6. Rangefinder according to one of Claims 1 to 5,
wherein the angle measuring device (5) is embodied with a spirit level.

7. Rangefinder according to Claim 6,
wherein the spirit level can be tilted in relation to the distance measuring device (3).

8. Rangefinder according to one of Claims 1 to 5,
wherein the angle measuring device (5) is embodied with an acceleration sensor (13).

## Revendications

1. Appareil de mesure de distance (1) comprenant :
un dispositif de mesure de distance (3) destiné à mesurer sans contact une distance entre l'appareil de mesure de distance (1) et un objet cible (9) ;
un dispositif de mesure d'angle (5) destiné à mesurer un angle d'orientation effectif entre une orientation effective de l'appareil de mesure de distance (1) et une orientation de référence ;
une unité de commande (7) ;
dans lequel l'unité de commande (7) est conçue pour lire l'angle d'orientation effectif à partir du dispositif de mesure d'angle (5) et pour commander le dispositif de mesure de distance (3) pour mesurer une distance cible en fonction de l'angle d'orientation effectif lu et d'un angle cible prédéterminé dès qu'une différence entre l'angle d'orientation effectif et l'angle cible prédéterminé s'abaisse en dessous d'une valeur de tolérance, et comportant un dispositif de fourniture en sortie (19) destiné à fournir en sortie des informations à un utilisateur ;
**caractérisé en ce que** l'unité de commande (7) est conçue pour fournir en sortie, au moyen du dispositif de fourniture en sortie (19) des informations indiquant dans quelle direction l'appareil de mesure (1) doit être amené à basculer pour tendre vers l'angle cible.

2. Appareil de mesure de distance selon l'une quelconque des revendications 1,
dans lequel l'unité de commande (7) est conçue pour commander le dispositif de mesure de distance (3) après le déclenchement d'un processus de mesure, pour mesurer en continu une distance entre l'appareil de mesure (1) et l'objet cible et pour déterminer la distance cible dès qu'une différence entre l'angle d'orientation effectif et l'angle cible prédéterminé s'abaisse en-dessous d'une valeur de tolérance.

3. Appareil de mesure de distance selon la revendication 1 ou 2, comprenant en outre :
un dispositif de fourniture en sortie (23) destiné à fournir en sortie des informations à un utilisateur ;
dans lequel l'unité de commande (7) est conçue pour fournir en sortie un signal au moyen du dispositif de fourniture en sortie (23) dès qu'une distance cible a été mesurée.

4. Appareil de mesure de distance selon la revendication 1, 2 ou 3,
dans lequel le dispositif de fourniture en sortie (19, 23) est conçu pour fournir en sortie des informations optiques et/ou acoustiques.

5. Appareil de mesure de distance selon l'une quelconque des revendications 1 à 4, comprenant en outre :
un dispositif de fourniture en entrée (15) pour la fourniture en entrée de l'angle cible.

6. Appareil de mesure de distance selon l'une quelconques des revendications 1 à 5,
dans lequel le dispositif de mesure d'angle (5) est réalisé de manière à comporter un niveau à bulle.

7. Appareil de mesure de distance selon la revendication 6,
dans lequel le niveau à bulle peut être amené à basculer par rapport au dispositif de mesure de distance (3).

8. Appareil de mesure de distance selon l'une quelconque des revendications 1 à 5,
dans lequel le dispositif de mesure d'angle (5) est réalisé de manière à comporter un capteur d'accélération (13).
